## Europäisches Patentamt

## European Patent Office

## Office européen des brevets

(19)

(11) Veröffentlichungsnummer: **0 005 560**
**B1**

(12) **EUROPÄISCHE PATENTSCHRIFT**

(45) Veröffentlichungstag der Patentschrift:
12.08.81

(21) Anmeldenummer: 79200065.5

(22) Anmeldetag: 07.02.79

(51) Int. Cl.³: **F 16 C 33/24,** C 22 C 1/04,
F 16 C 33/12

(54) Gleitlagerwerkstoff.

(30) Priorität: 25.02.78 DE 7805790 U

(43) Veröffentlichungstag der Anmeldung:
28.11.79 Patentblatt 79/24

(45) Bekanntmachung des Hinweises auf die Patenterteilung:
12.08.81 Patentblatt 81/32

(84) Benannte Vertragsstaaten:
DE FR GB IT

(56) Entgegenhaltungen:
DE-U-7 701 760
GB-A-1 149 947
US-A-2 691 814
US-A-2 838 829

(73) Patentinhaber: KARL-SCHMIDT GMBH,
Christian-Schmidt-Strasse 8/12, D-7107 Neckarsulm (DE)

(72) Erfinder: Baureis, Hans Paul, Höhenweg 5,
D-6909 Dielheim (DE)
Erfinder: Braus, Jürgen, Odenwaldstraße 41,
D-6909 Walldorf (DE)
Erfinder: Funke, Rolf, Im Kirchbrändl 8, D-7522 Bad
Schönborn (DE)
Erfinder: Pfestorf, Harald, Panoramastraße 18/1,
D-7107 Untereisesheim (DE)

(74) Vertreter: Fischer, Ernst, Dr., Reuterweg 14,
D-6000 Frankfurt am Main 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Gleitlagerwerkstoff

Die Erfindung betrifft ein Gleitlager, bestehend aus einer unmittelbar auf eine metallische Stützschicht porös aufgesinterten 0,1 bis 0,5 mm dicken, aus einer Legierung der Zusammensetzung 5 bis 25 Gew.-% Blei, 5 bis 15 Gew.-% Zinn, Rest Kupfer, gebildeten Trägerschicht, deren Poren vollständig mit Polytetrafluoräthylen, das gegebenenfalls bis zu 20% von einem oder mehreren die Gleitung verbessernden Werkstoffen enthält, in der Weise ausgefüllt sind, daß sich über der Trägerschicht zusätzlich noch eine 0,01 bis 0,05 mm dicke Deckschicht des gleichen Materials befindet.

Dieses aus dem DE-GM 77 01 760 bekannte Gleitlager füllt die Lücke zwischen den metallischen und den reinen Trockenlagern aus.

In seinem grundsätzlichen Aufbau besteht dieses Gleitlager aus einer metallischen Stützschicht und einer aus kugelförmigen Pulverteilchen porös aufgesinterten metallischen Trägerschicht, deren Poren mit Polytetrafluoräthylen in der Weise gefüllt sind, daß über der Trägerschicht eine aus dem gleichen Material bestehende Deckschicht von 0,01 bis zu 0,05 mm Dicke angeordnet ist. In der Lauffläche können sich eine große Zahl von Vertiefungen befinden, die vor dem Zusammenbau von Zapfen und Lager mit einem Schmierstoff gefüllt werden.

Dieses Gleitlager eignet sich ausgezeichnet zum Lauf unter Grenzschmierbedingungen, z. B. bei oszillierender Drehbewegung, hohem Druck, kleiner Geschwindigkeit, häufigem Anfahren — Halten — Anfahren unter Last. Das bedeutet, daß das wartungsarme Gleitlager insbesondere für solche Lagerstellen geeignet ist, die nur von Zeit zu Zeit geschmiert werden müssen.

Das Gleitlager ist besonders dort geeignet, wo eine Vollschmierung zu aufwendig ist, andererseits aber reine Trockenlager den an sie gestellten Anforderungen nicht genügen. Das Polytetrafluoräthylen hat mit Werten von 0,01 bis 0,1 eine vergleichsweise niedrige Reibungszahl und weist eine geringe Verschweißneigung mit den Werkstoffen des Lagerzapfens auf. Ferner zeigt das Lager eine den Weißmetallagern ähnliche Einbettfähigkeit für in den Lagerspalt eingedrungene Fremdkörper. Das Lager besitzt ferner den Vorteil, daß das Polytetrafluoräthylen nicht quillt und demzufolge eine Verengung des Lagerspiels bei feuchter Atmosphäre nicht eintritt. Es ist jedoch nicht zu vermeiden, daß bei eventuellen Betriebsstörungen die Deckschicht so weit abgetragen wird, daß die Trägerschicht örtlich freigelegt ist. Das eingelagerte Blei steht bei der Berührung der Gegenlauffläche mit der Trägerschicht als zusätzliches Schmiermittel in feinster Verteilung zur Verfügung, so daß dadurch die Zerstörung des Lagerzapfens weitgehend verhindert wird.

In solchen Fällen hat sich häufig gezeigt, daß die Trägerschicht, insbesondere bei hohen Belastungen, zwar die erforderlichen Notlaufeigenschaften, jedoch nicht die notwendige Gestaltfestigkeit besitzt, so daß der Zapfen gegen die Stützschicht läuft und dabei erheblich in Mitleidenschaft gezogen wird.

Es ist daher die Aufgabe der vorliegenden Erfindung, die Beschädigung des Lagerzapfens zu verhindern, auch wenn die Trägerschicht beschädigt, d. h. örtlich freigelegt, worden ist.

Die Lösung dieser Aufgabe besteht erfindungsgemäß darin, daß die einzelnen Partikel der porös aufgesinterten Trägerschicht die Form von gestreckten Knollen aufweisen.

Die höhere Belastbarkeit der Trägerschicht wird dadurch erzielt, daß durch die erfindungsgemäße Gestalt der einzelnen Pulverpartikel der porös aufgesinterten Trägerschicht die sich berührenden Auf- bzw. Anlageflächen benachbarter Partikel vergrößert sind.

Im übrigen konnte beobachtet werden, daß das in den Partikeln der Trägerschicht enthaltene Blei im Bereich ihrer Randzonen, in denen es mit den im Thermo- oder Duroplast enthaltenen Bleipartikeln zur Berührung kommt, aus den Partikeln der Trägerschicht auswandert und in das Polytetrafluoräthylen an die Stelle von durch Verschleiß verbrauchtes Blei tritt.

Das die Poren der Trägerschicht ausfüllende und die Deckschicht bildende Polytetrafluoräthylen kann als die Gleitung verbessernde Werkstoffe $MoS_2$, Graphit, PbO, Polyamid, Polyimid, mikroverkapselte Schmiermittel einzeln oder zu mehreren enthalten.

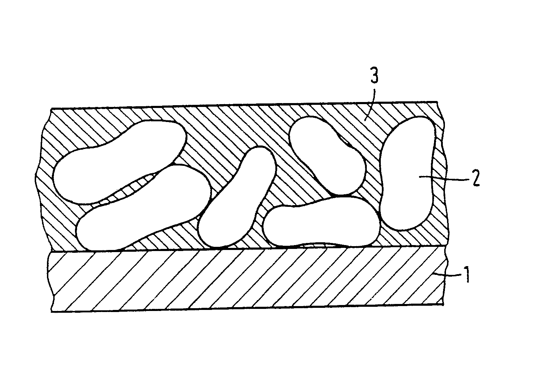

Das erfindungsgemäße Gleitlager ist in der Zeichnung im Querschnitt beispielhaft dargestellt:

Auf die Stahlstützschicht 1 ist die aus 10 Gew.-% Blei, 10 Gew.-% Zinn, Rest Kupfer, bestehende Trägerschicht 2 porös aufgesintert, wobei die Poren mit Polytetrafluoräthylen 3, das auch die Deckschicht bildet, ausgefüllt sind.

## Patentansprüche

1. Gleitlager, bestehend aus einer unmittelbar auf eine metallische Stützschicht porös aufgesinterten 0,1 bis 0,5 mm dicken, aus einer Legierung der Zusammensetzung 5 bis 25 Gew.-% Blei, 5 bis 15 Gew.-% Zinn, Rest Kupfer, gebildeten Trägerschicht, deren Poren vollständig mit Polytetrafluoräthylen, das gegebenenfalls bis zu 20% von einem oder mehreren die Gleitung verbessernden Werkstoffen enthält, in der Weise ausgefüllt sind, daß sich über der Trägerschicht zusätzlich noch eine 0,01 bis 0,05 mm dicke Deckschicht des gleichen Materials befindet, dadurch gekennzeichnet, daß die einzelnen Partikel der porös aufgesinterten Trägerschicht die Form von gestreckten Knollen aufweisen.

2. Gleitlager nach Anspruch 1, dadurch gekennzeichnet, daß das die Poren der Trägerschicht ausfüllende und die Deckschicht bildende Polytetrafluoräthylen als die Gleitung verbessernde Werkstoffe MoS₂, Graphit, PbO, Polyamid, Polyimid, mikroverkapselte Schmiermittel einzeln oder zu mehreren enthält.

## Claims

1. A bearing material wherein the material comprises a porous metallic carrier layer which is from 0.1 to 0.5 thick sintered on to a metallic supporting layer, the pores of the carrier layer being filled completely with polytetrafluoroethylene and wherein the carrier layer consists of an alloy of the composition 5 to 25% by weight lead, 5 to 15% by weight tin, the remainder copper and wherein a layer of said polytetrafluoroethylene 0.01 to 0.05 mm thick is present above said carrier layer and wherein in case said polytetrafluoroethylene contains up to 20% by weight of one or more additional materials for improving the sliding properties of the bearing material and wherein the particles of said carrier layer are formed as elongated nodules.

2. A bearing material as claimed in claim 1 wherein said additional material containing in the polytetrafluoroethylene is molybdenum disulphide, graphit, lead monoxide, a polyamide, a polyimide, a microencapsulated lubricant or two or more thereof.

## Revendications

1. Palier lisse, comprenant, directement sur une couche d'appui métallique, une couche support poreuse, frittée, de 0,1 à 0,5 mm d'épaisseur, en un alliage contenant de 5 à 25% en poids de plomb, de 5 à 15% en poids d'étain, le reste étant du cuivre, et dont les pores sont entièrement emplis de polytétrafluoréthylène, contenant éventuellement jusqu'à 20% en poids d'une substance ou de plusieurs substances améliorant le glissement, de manière à ce qu'il y ait en plus, au-dessus de la couche support, une couche de recouvrement de 0,01 à 0,05 mm d'épaisseur en la même matière, caractérisé en ce que les particules de la couche-support frittée, poreuse affectent la forme de tubercules élancés.

2. Palier lisse suivant la revendication 1, caractérisé en ce que le polytétrafluoroéthylène emplissant les pores de la couche-support et formant, le cas échéant, la couche de recouvrement contient comme substance améliorant le glissement du MoS₂, du graphite, du PbO, du polyamide, du polyimide, un agent lubrifiant en microcapsules, ou un mélange de ces subs-tances.